(19) Europäisches Patentamt
European Patent Office
Office européen des brevets

(11) **EP 2 288 073 B1**

(12) **EUROPÄISCHE PATENTSCHRIFT**

(45) Veröffentlichungstag und Bekanntmachung des Hinweises auf die Patenterteilung:
**31.07.2013  Patentblatt 2013/31**

(51) Int Cl.:
***H04L 9/06*** *(2006.01)*

(21) Anmeldenummer: **10167731.8**

(22) Anmeldetag: **29.06.2010**

(54) **Vorrichtung zur Verschlüsselung von Daten**

Apparatus for encrypting data

Dispositif destiné au codage de données

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.06.2009   DE 202009008987 U**

(43) Veröffentlichungstag der Anmeldung:
**23.02.2011   Patentblatt 2011/08**

(73) Patentinhaber: **CompuGroup Medical AG
56070 Koblenz (DE)**

(72) Erfinder:
• **Spalka, Adrian, Dr.
56068 Koblenz (DE)**
• **Lehnhardt, Jan
56068 Koblenz (DE)**

(74) Vertreter: **Richardt Patentanwälte GbR
Wilhelmstraße 7
65185 Wiesbaden (DE)**

(56) Entgegenhaltungen:
EP-A2- 1 152 567          DE-A1- 10 206 065
DE-A1- 19 856 237        DE-A1-102004 006 570
US-A1- 2006 177 065

**Beschreibung**

Die Erfindung betrifft eine Vorrichtung zur Verschlüsselung von Daten.

Üblicherweise werden vertrauliche Daten verschlüsselt, wenn diese über ein nicht vertrauenswürdiges Übertragungsmedium übertragen werden sollen.

Aus dem Stand der Technik sind verschiedene Verschlüsselungsvorrichtungen bekannt. Der Advanced Encryption Standard (AES) ist ein symmetrisches Kryptosystem, dessen Algorithmus frei verfügbar ist. Der zur AES-Verschlüsselung benutze Schlüssel muss dem Empfänger der Daten vorlieben, um die Daten entschlüsseln zu können.

AES gilt heute als sicher; aufgrund der Entwicklungen auf dem Gebiet der Verschlüsselungstechniken ist anzunehmen, dass mit AES verschlüsselte Daten in etwa 30 Jahren von Unbefugten, die den erforderlichen Schlüssel nicht besitzen, entschlüsselt werden können.

Bei der Übertragung der Daten über ein Übertragungsmedium, z.B. das Internet, passieren Daten mehrere Knoten, bevor sie beim Empfänger ankommen. Ein Knoten kann ein Langzeitgedächtnis haben und weitergeleitete Nachrichten speichern. Für vertrauliche Nachrichten, die verschlüsselt wurden, bedeutet dies, dass sie nicht direkt von Unbefugten entschlüsselt werden können; jedoch kann nicht sichergestellt werden, dass auch nach einem längeren Zeitraum, z.B. in 30 Jahren, die Daten nicht von unbefugten Personen entschlüsselt werden können.

Aus DE 198 56 237 A1 ist eine dynamische Schlüsselgenerierung bekannt, bei der die Vertraulichkeit der Schlüssel durch Einsatz jeweils eines neuen Schlüssels für jede Verschlüsselung erzielt wird.

Aus EP 1 152 567 A2 ist ein Verfahren zur Sicherung der Kommunikation zwischen Rechnernetzen bekannt, bei dem eine Bibliothek von Schlüsseln existiert und bei dem vor jeder Verschlüsselung aus der Bibliothek ein Schlüssel ausgewählt wird.

Aus US 2006/0177065A1 ist ein Verfahren zur Verschlüsselung bekannt, bei dem eine Tabelle mit Zufallszahlen eingesetzt wird. Es wird zufällig eine Untermenge dieser Zahlen ausgewählt und einmalig für eine Verschlüsselung eingesetzt.

Ferner ist aus DE 10 2004 006 570 A1 ein Blockverschlüsselungsverfahren bekannt, bei dem für jede neue Verschlüsselung und für jeden neuen Klartextdatenblock ein neuer Schlüssel erzeugt wird.

DE 102 06 065 A1 offenbart ein Verfahren zur symmetrischen Verschlüsselung einer Nachricht mittels eines Schlüssels. Dabei wird eine datenweise Verknüpfung der Daten der Nachricht mit den Daten des Schlüssels vorgenommen. Als zusätzliche Ausbildung des Verfahrens ist vorgesehen, die Daten der Nachricht mit einer Zufallsfolge von Daten zu erweitern und beide zu verschlüsseln. Ferner ist vorgesehen, die Daten ggf. nicht Date für Date in fester Reihenfolge zu verknüpfen, sondern die Verknüpfungsreihenfolge der Daten in Abhängigkeit eines Zeigers vorzunehmen, dessen Position wenigstens teilweise durch eine teil der vorangegangen Nachricht bestimmt wird.

Der vorliegenden Erfindung liegt dem gegenüber die Aufgabe zugrunde, eine verbesserte Vorrichtung für die Verschlüsselung von Daten zu schaffen.

Die der Erfindung zugrunde liegenden Aufgaben werden mit den Merkmalen des unabhängigen Patentanspruchs gelöst. Ausführungsformen der Erfindung sind in den abhängigen Patentansprüchen gegeben.

Erfindungsgemäß wird eine Vorrichtung geschaffen, die es ermöglicht, Daten sicherer zu verschlüsseln als dies mit den üblichen bekannten Verschlüsselungstechnologien möglich ist. Hierfür verfügt die Vorrichtung über Mittel zur symmetrischen Verschlüsselung von Daten. Beispielsweise können dies Mittel zur Verschlüsselung von Daten nach dem Advanced Encryption Standard (AES) sein. Vorzugsweise handelt es sich dabei um eine Vielzahl von Bitfolgen $A_{i,,j}$ mit dazugehörigen Zeigern $a_i$. Ferner verfügt die Vorrichtung über Mittel zur Verschlüsselung symmetrisch verschlüsselter Daten mit Hilfe einer Bitfolge, die maximale Entropie aufweist. Maximale Entropie bedeutet maximale Zufälligkeit z.B. einer Bitfolge. Dies bedeutet, dass die Bitfolge nicht kompressionsfähig ist. Dies ist vorteilhaft, da bei der Verschlüsselung mit einer Bitfolge maximaler Entropie die Verschlüsselung sicherer ist als eine Verschlüsselung mit einer Bitfolge niedrigerer Entropie. Vorzugsweise handelt es sich bei der Verschlüsselung mit Hilfe der Bitfolge maximaler Entropie um eine Verschlüsselung nach dem XOR-Verfahren (Exclusive or). Dabei werden ein aus der Bitfolge gewonnener Schlüssel und die zu verschlüsselnden Daten als Input für die XOR-Operation verwendet. Der Output ist die verschlüsselte Nachricht. Der Output bei einer XOR-Operation beträgt beispielsweise bei einem Input einer 1 und einer 0 1, während der Output beim Input von zwei gleichen Bits (1,1; 0,0) 0 beträgt. Die Entschlüsselung einer so verschlüsselten Nachricht erfolgt wiederum nach dem XOR-Verfahren mit dem gleichen Schlüssel.

Für die symmetrische Verschlüsselung wird vorzugsweise das AES-Verfahren verwendet. Es kann jedoch auch jede andere Verschlüsselungsmethode verwendet werden.

Nach Ausführungsformen der Erfindung ist die Bitfolge maximaler Entropie so ausgebildet, dass für eine Verschlüsselung ein Abschnitt aus der Bitfolge verwendet wird. Vorzugsweise entspricht die Größe des verwendeten Abschnitts aus der Bitfolge der Datenmenge der zu verschlüsselnden symmetrisch verschlüsselten Daten, sodass für jedes zu verschlüsselnde Bit ein Bit der Bitfolge verwendet wird. Für aufeinander folgende Verschlüsselung verwendet die Vorrichtung variierende Abschnitte der Bitfolge. Vorzugsweise bleibt die Bitfolge unverändert. Dies bedeutet, dass für zumindest zwei unterschiedliche Verschlüsselungen zumindest ein Teil der verwendeten Abschnitte der Bitfolge gleich ist. Dies ist vorteilhaft, da die Bitfolge so nicht verbraucht wird und unendlich oft zur Verschlüsselung eingesetzt werden kann. Alternativ dazu verbraucht sich die Bitfolge. Dies bedeutet, dass von einer erfindungsgemäßen Vorrichtung ein Abschnitt der Bitfolge nur einmal für eine Verschlüsselung verwendet wird. Wenn jeder Abschnitt der Bitfolge verwendet wurde, ist die Bitfolge verbraucht und wird nicht mehr für Verschlüsselungen verwendet.

Nach Ausführungsformen der Erfindung verfügt die Vorrichtung über Mittel zur Kommunikation über ein Übertragungsmedium. Dies ist vorteilhaft, da über das Übertragungsmedium mehrere Vorrichtungen miteinander verbunden werden können. Vorzugsweise handelt es sich bei dem Übertragungsmedium um ein Netzwerk, z.B. das Internet.

Nach Ausführungsformen der Erfindung verfügt die Vorrichtung über Mittel zur Entschlüsselung von Daten, die mit Hilfe der Bitfolge mit maximaler Entropie verschlüsselt wurden und über Mittel zur Entschlüsselung von symmetrisch verschlüsselten Daten. Die Entschlüsselung der Daten, die mit Hilfe der Bitfolge verschlüsselt wurden, erfolgt dabei mit der gleichen Bitfolge. Vorzugsweise werden die Daten nach dem XOR-Verfahren mit Hilfe der Bitfolge entschlüsselt.

Wenn sich mehrere der oben beschriebenen Vorrichtungen in einem Netzwerk befinden, ist es möglich, vertrauliche Daten sicher vor der Entschlüsselung durch Unbefugte über das unsichere Netzwerk zu verschicken, indem sie zunächst von der Vorrichtung symmetrisch verschlüsselt werden und anschließend mit Hilfe der Bitfolge maximaler Entropie wiederum verschlüsselt werden. Es handelt sich also um doppelt verschlüsselte Daten, die zuerst symmetrisch verschlüsselt wurden; anschließend werden die symmetrisch verschlüsselten Daten durch die Vorrichtung noch einmal mit Hilfe der Bitfolge maximaler Entropie verschlüsselt. Vorzugsweise geschieht dies nach dem XOR-Verfahren. Die doppelt verschlüsselten Daten können über das nicht vertrauenswürdige Netzwerk an eine andere Vorrichtung gesendet werden. Falls die Daten von einem Knoten im Netzwerk gespeichert werden, obwohl dieser die Daten nicht entschlüsseln kann, ist auch eine zukünftige Entschlüsselung unmöglich. Dadurch, dass die Daten zunächst von der Vorrichtung nach dem Advanced Encryption Standard verschlüsselt werden, weisen sie bereits eine höhere Entropie als die ursprüngliche Nachricht auf. Diese bereits verschlüsselten Daten mit der erhöhten Entropie werden nun wiederum verschlüsselt mit Hilfe der Bitfolge maximaler Entropie. Diese Verschlüsselung geschieht mittels einer eXclusive OR (XOR) Operation. Die XOR-Operation ist Entropie erhaltend. Die Verschlüsselung einer Nachricht N der Länge l mit Hilfe der Bitfolge R, aus der ein Schlüssel gewonnen wird, nach dem XOR-Verfahren verläuft nach folgender Formel:

$$C = N \oplus R[r : r + l - 1]$$

Der Schlüssel wird aus R gewonnen, indem ein Intervall der Länge l von R als Schlüssel verwendet wird. Das Intervall beginnt an der Position r und endet bei der Position r+l-1. Das Resultat der Verschlüsselung, das Chiffrat C, weist ebenfalls die Länge l auf, da jeweils ein Bit der Nachricht N und ein Bit des Schlüssels als Input für die XOR-Operation ($\oplus$) verwendet wurden, die als Output ein Bit des Chiffrats C geliefert hat.

Anschließend werden die mit dem XOR-Verfahren verschlüsselten Daten durch das Übertragungsmedium geschickt, wobei dem Empfänger mitgeteilt werden muss, an welcher Position r der Bitfolge R der Schlüssel beginnt. Die Länge des Schlüssels l ergibt sich aus der Länge des Chiffrats C. Der Empfänger der Nachricht kann die Nachricht mit Hilfe des XOR-Verfahrens wieder entschlüsseln:

$$N = C \oplus R[r : r + l - 1]$$

Als Input für die XOR Operation werden nun die Bits des Chiffrats C und der Schlüssel verwendet. Der Schlüssel wird hier, genau wie oben für die Verschlüsselung beschrieben, aus der Bitfolge R gewonnen. Als Output der XOR-Operation ergibt sich das zugehörige Bit der Nachricht N. Der Empfänger verfügt nun also über die entschlüsselte Nachricht N und kann diese lesen und weiterverwenden.

Der Vorteil des XOR-Verfahrens ist, dass das Chiffrat C ohne die Bitfolge R nicht entschlüsselt werden kann, was theoretisch bewiesen ist. Bei einer mehrmaligen Verwendung von der Bitfolge R ist eine Entschlüsselung durch Unbefugte ohne die Bitfolge R nicht mehr ausgeschlossen. Da allerdings immer variierende Abschnitte der Bitfolge R erfindungsgemäß für die Verschlüsselung und Entschlüsselungen verwendet werden, ist es unwahrscheinlich, dass ein Abschnitt von R besonders oft benutzt wird. Außerdem wird die Sicherheit dadurch erhöht, dass nicht eine im Klartext geschriebene Nachricht mit geringer Entropie verschlüsselt wird sondern eine bereits symmetrisch, beispielsweise nach dem Advanced Encryption Standard, verschlüsselte Nachricht mit erhöhter Entropie.

Für den Betrieb mehrerer erfindungsgemäßer Vorrichtungen in einem Netzwerk ist es also erforderlich, dass alle Vorrichtungen über die Bitfolge maximaler Entropie R verfügen. Andernfalls wäre eine Entschlüsselung einer durch eine erfindungsgemäße Vorrichtung verschlüsselten Nachricht nicht möglich. Ferner weist jede erfindungsgemäße Vorrichtung des Netzwerks eine Vielzahl von Bitfolgen $A_{i,j}$ auf, die für die symmetrische Verschlüsselung verwendet werden. Damit Teilnehmer, für die die Daten nicht bestimmt sind, die Daten nicht entschlüsseln können, ist es vorteilhaft, wenn jeder Teilnehmer über so viele Bitfolgen $A_{i,j}$ verfügt, wie es Kommunikationspartner für den erfindungsgemäß verschlüsselten Datenaustausch in dem Netzwerk gibt. Jede Vorrichtung in dem Netzwerk weist also eine erste Menge von Daten auf, die zumindest die Bitfolge R aufweist. Vorzugsweise weist die erste Menge von Daten ferner bei n erfindungsgemäßen Vorrichtungen, die über ein Netzwerk miteinander verschlüsselte Daten austauschen, n-1 Bitfolgen $A_{i,j}$ auf. Das i bezeichnet dabei die i-te erfindungsgemäße Vorrichtung im Netzwerk und das j die j-te erfindungsgemäße Vorrichtung im Netzwerk. Eine erfindungsgemäße Vorrichtung i verfügt also über n-1 Bitfolgen $A_{i,j}$. So steht für jeden potentiellen Kommunikationspartner für die erfindungsgemäße Verschlüsselung eine Bitfolge $A_{i,j}$ für die symmetrische Verschlüsselung zur Verfügung. Es wird für jeden Kommunikationspartner eine andere Bitfolge $A_{i,j}$ verwendet, damit Kommunikationspartner, für die die Daten nicht bestimmt sind, die Daten nicht entschlüsseln können. Um eine Entschlüsselung der von der erfindungsgemäßen Vorrichtung i verschlüsselten Nachricht zu gewährleisten, ist es vorteilhaft, wenn $A_{i,j}$ gleich $A_{j,i}$ ist.

Nach Ausführungsformen der Erfindung weist die Vorrichtung einen Speicher auf und ist dazu ausgebildet, Daten zweifach erfindungsgemäß zu verschlüsseln, im Speicher zu speichern und bei Bedarf wieder zu entschlüsseln. Hierfür wird beispielsweise eine zusätzliche Bitfolge $A_{i,i}$ und ein dazugehöriger Zeiger $a_i$ zur symmetrischen Verschlüsselung verwendet. Daher verfügt eine Ausführungsform der Erfindung über n Bitfolgen $A_{i,j}$und über n Zeiger $a_j$, wenn die Vorrichtung dafür ausgebildet ist, zweifach verschlüsselte Daten zu speichern. Ferner muss mit der zweifach verschlüsselten Nachricht der für die XOR-Verschlüsselung verwendete Zeiger $r_i$ gespeichert werden, da er für die Entschlüsselung benötigt wird und für andere Verschlüsselungen verändert werden kann.

Jede erfindungsgemäße Vorrichtung könnte die äußere Verschlüsselung mit der Bitfolge R entschlüsseln, da der Schlüssel R allen Kommunikationspartnern zur Verfügung steht. Jedoch kann die dann noch symmetrisch verschlüsselte Nachricht nicht von einem Kommunikationspartner entschlüsselt werden, für den die Nachricht nicht bestimmt ist.

Vorzugsweise wird die symmetrische Verschlüsselung mit Hilfe der Bitfolgen $A_{i,j}$ mit Hilfe eines Zeigers $a_j$ durchgeführt, wobei j die erfindungsgemäße Vorrichtung ist, die die Nachricht erhalten soll und i die erfindungsgemäße Vorrichtung, die die Nachricht verschlüsselt. Es ist also vorteilhaft, wenn jede erfindungsgemäße Vorrichtung zusätzlich zu den Bitfolgen $A_{i,j}$ über n-1-Zeiger a verfügt. Vorzugsweise wird mit Hilfe der Bitfolge $A_{i,j}$ und des Zeigers $a_j$ die symmetrische Verschlüsselung mit einem AES-Schlüssel s durchgeführt. Der AES-Schlüssel s berechnet sich aus der Bitfolge $A_{i,j}$ und dem Zeiger $a_j$ nach folgender Formel:

$$s = A_{i,j}[a_j : a_j + x - 1]$$

Wobei x die Länge des Schlüssels ist. Üblicherweise wird für die symmetrische AES-Verschlüsselung eine Schlüssellänge x von 256 Bits verwendet. Der Schlüssel s besteht also aus einem Intervall der Bitfolge $A_{i,j}$. Anschließend wird der Zeiger $a_j$ verschoben:

$$a_j = a_j + x$$

Der Zeiger $a_j$ zeigt nun also auf das Bit, das als erstes nicht mehr für die Bildung des Schlüssels verwendet wurde. Danach wird ein AES-Initialisierungsvektor v nach folgender Formel berechnet:

$$v = A_{i,j}[a_j : a_j + \frac{x}{2} - 1]$$

Das Intervall der Bitfolge $A_{i,j}$, aus dem der Initialisierungsvektor v gebildet wird beginnt also an der Stelle, auf das der verschobene Zeiger $a_j$ zeigt. Der Initialisierungsvektor v besteht also aus einem Intervall der Bitfolge $A_{i,j}$, das direkt an das Intervall, aus dem der Schlüssel s gebildet wurde, anschließt. Die Länge des Initialisierungsvektors beträgt üblicherweise die Hälfte der Länge x des Schlüssels.

Der Zeiger $a_j$ zeigt zu Beginn also auf eine bestimmte Stelle der Bitfolge $A_{i,j}$, an der der Schlüssel s beginnt. Die Länge x des Schlüssels s ist vorher bestimmt, sodass der Kommunikationspartner j, der die Daten empfängt, von vornherein weiß, wie lang der Schlüssel ab der Stelle, an die der Zeiger zeigt, ist. Der Initialisierungsvektor v ist üblicherweise halb so lang wie die Schlüssellänge s und berechnet sich ebenfalls aus der Bitfolge $A_{i,j}$ und dem Zeiger $a_j$, der nach der Bildung des Schlüssels verschoben worden ist.

Nach Ausführungen der Erfindung weisen die Mittel zur Verschlüsselung der symmetrisch verschlüsselten Daten mit Hilfe der Bitfolge einen Zeiger auf, wobei der Zeiger so ausgebildet ist, dass der für die Verschlüsselung verwendete Abschnitt der Bitfolge dort beginnt, wo der Zeiger hinzeigt. Es weist also vorzugsweise jede erfindungsgemäße Vorrichtung i einen Zeiger $r_i$ auf, der als Zeiger für die Bitfolge R verwendet wird. Der Zeiger $r_i$ zeigt also auf die Stelle von R, an der der Schlüssel beginnt, der für die Entschlüsselung der Daten benötigt wird. Die Verschlüsselung einer Nachricht M mit den Bitfolgen $A_{i,j}$, R und den Zeigern $a_j$, $r_i$ erfolgt nach Ausführungsformen der Erfindung nach dem folgenden Prinzip:

Die erfindungsgemäße Vorrichtung i weist eine Nachricht M auf, die erfindungsgemäß verschlüsselt an die erfindungsgemäße Vorrichtung j gesendet werden soll. Die Nachricht M wird erfindungsgemäß zunächst symmetrisch verschlüsselt. Vorzugsweise geschieht dies mit einem AES-Schlüssel s. Dieser berechnet sich aus der Bitfolge $A_{i,j}$ und dem Zeiger $a_j$ nach folgender

Formel:

$$s = A_{i,j}[a_j : a_j + x - 1]$$

Anschließend wird der Zeiger $a_j$ verschoben:

$$a_j = a_j + x$$

Ferner wird für die erfolgreiche Ver- und Entschlüsselung ein AES-Initialisierungsvektor v benötigt, der sich nach folgender Formel aus der Bitfolge $A_{i,j}$ und dem Zeiger $a_j$ berechnet:

$$v = A_{i,j}[a_j : a_j + \frac{x}{2} - 1]$$

Die erfindungsgemäße Vorrichtung i verfügt nun über einen AES-Schlüssel s und einen dazugehörigen AES-Initialisierungsvektor v. Die Nachricht M wird mit diesen beiden Parametern symmetrisch nach dem Advanced Encryption Standard, beispielsweise mit einem 256Bit-Schlüssel, verschlüsselt:

$$C' = AES - 256(M, s, v)$$

C' bezeichnet also die symmetrisch mit dem Schlüssel s und dem Initialisierungsvektor v verschlüsselte Nachricht M. Anschließend wird die symmetrisch verschlüsselte Nachricht C' der Länge I mit Hilfe der Bitfolge R und dem Zeiger $r_i$ nochmals verschlüsselt. Diese Verschlüsselung geschieht nach dem XOR-Verfahren. Durch die nochmalige Verschlüsselung mit R wird gewährleistet, dass die Nachricht auch nach einem längeren Zeitraum nicht durch Unbefugte entschlüsselt werden kann. Selbst wenn z.B. in 30 Jahren es möglich sein sollte, eine AES-verschlüsselte Nachricht zu entschlüsseln ohne über den Schlüssel zu verfügen, wird es ungleich schwerer, wenn nicht sogar unmöglich, sein, die Verschlüsselung nach dem XOR-Verfahren als Unbefugter zu entschlüsseln. Die Verschlüsselung des symmetrisch verschlüsselten Chiffrats C' wird durch die erfindungsgemäße Vorrichtung i folgendermaßen durchgeführt:

$$C = C' \oplus R[r_i : r_i + l - 1]$$

C ist die nun doppelt verschlüsselte Nachricht, die an den erfindungsgemäßen Empfänger j gesendet werden soll, und I ist die Länge des Chiffrats C', was gleichbedeutend mit der benötigten Schlüssellänge und der Länge des Chiffrats C ist. Der Schlüssel besteht aus einem Abschnitt der Bitfolge R und hat die Länge I. Der Schlüssel beginnt an der Stelle, an die der Zeiger $r_i$ zeigt. Das doppelt verschlüsselte Chiffrat C kann jetzt über das nicht vertrauenswürdige Übertragungsmedium an die erfindungsgemäße Vorrichtung j übertragen werden. Damit die erfindungsgemäße Vorrichtung j das Chiffrat C entschlüsseln kann, sendet i an j ebenfalls die beiden Zeiger $r_i$ und den Wert von $a_j$ vor der Gewinnung des Schlüssels s und des Initialisierungsvektors v: $a_j$ - x. Die Bitfolgen $A_{i,j}$ und R sind bereits in der erfindungsgemäßen Vorrichtung j vorhanden.

Die Entschlüsselung des doppelt verschlüsselten Chiffrats C erfolgt in der erfindungsgemäßen Vorrichtung j. Zunächst wird mit Hilfe der Bitfolge R und dem von i empfangenen Zeiger $r_i$ der Schlüssel zur Entschlüsselung der Nachricht C nach dem XOR-Verfahren berechnet:

$$M = C \oplus R[r_i : r_i + l - 1]$$

Die Länge I ist bekannt, da sie mit der Länge des Chiffrats C übereinstimmen muss. Das symmetrisch verschlüsselte Chiffrat C' ist das Ergebnis der Entschlüsselung nach dem XOR-Verfahren und wird mit dem AES-Verfahren entschlüsselt. Der Schlüssel für das AES-Verfahren und der Vektor berechnen sich aus der Bitfolge $A_{i,j}$ und dem Zeiger $a_j$, der von der erfindungsgemäßen Vorrichtung i an die erfindungsgemäße Vorrichtung j versendet wurde.

$$s = A_{i,j}[a_j : a_j + x - 1]$$

Anschließend wird der Zeiger $a_j$ verschoben:

$$a_j = a_j + x$$

Und der Initialisierungsvektor v gewonnen:

$$v = A_{i,j}[a_j : a_j + \frac{x}{2} - 1]$$

Aus s, v und C' lässt sich nun nach dem AES-Verfahren M gewinnen:

$$M = AES - 256(C', s, v)$$

Nun liegt die unverschlüsselte Nachricht M in der erfindungsgemäßen Vorrichtung j vor.

Für nachfolgende Verschlüsselungen müssen andere Schlüssel verwendet werden, damit der Sicherheitslevel auf dem gleichen hohen Niveau bleibt. Die Zeiger $a_j$ und $r_i$ müssen also verändert werden, damit andere Abschnitte aus den Bitfolgen $A_{i,j}$ und R für die Berechnung der Schlüssel verwendet werden. Sie werden jeweils an das Bit der Bitfolge gesetzt, das als erstes nicht mehr für die Gewinnung des Schlüssels s und des Initialisierungsvektors v verwendet wurde.

Nach Ausführungsformen der Erfindung wird die Bitfolge $A_{i,j}$ stückweise verbraucht, d.h. ein Abschnitt wird nur einmal verwendet. Die Bitfolge R wird von jeder erfindungsgemäßen Vorrichtung ebenfalls schrittweise verbraucht. Ein Stück von R wird also maximal n-mal benutzt, wobei n die Anzahl der Kommunikationspartner in einem Übertragungsmedium, zum Beispiel einem Netzwerk, bezeichnet. Die Zeiger $r_i$ auf R zeigen jedoch für jeden Kommunikationspartner auf eine andere Stelle, sodass es unwahrscheinlich ist, dass zwei verschiedene Kommunikationspartner den gleichen Schlüssel aus R bilden. Jeder Abschnitt von R wird maximal n-mal für eine Verschlüsselung verwendet, jeweils einmal von jedem Kommunikationspartner, wobei es n-Kommunikationspartner in dem Übertragungsmedium gibt. Alternativ kann die Bitfolge R so gestaltet sein, dass sie sich nicht verbraucht.

Wenn die Gewinnung eines Schlüssels aus der Bitfolge R nicht mehr möglich ist, da jeder Abschnitt von R nur einmal von einer erfindungsgemäßen Vorrichtung zur Verschlüsselung verwendet wird und bereits ein so großer Teil von R verwendet wurde, dass nicht mehr genügend Bits für die Gewinnung des Schlüssels zur Verfügung stehen, gibt das Gerät nach Ausführungsformen der Erfindung eine Meldung aus, dass eine neue Bitfolge R benötigt wird. Die gleiche Vorgehensweise ist in Ausführungsformen der Erfindung für die Bitfolgen $A_{i,j}$ vorgesehen.

Wenn die Bitfolge R alternativ so ausgebildet ist, dass eine mehrmalige Verwendung eines Abschnitts von R für die Gewinnung mehrerer Schlüssel möglich ist, wird bei erreichen des Endes der Bitfolge R mit der Länge L der Zeiger $r_i$ wieder auf den Anfang der Bitfolge gesetzt. Dies ist mathematisch beispielsweise durch die Anwendung von Modulo möglich:

$$r_i = (r_i + l) \bmod L$$

Wenn beispielsweise der Zeiger $r_i$ bei einer 100 Bits umfassenden Bitfolge R auf das Bit Nummer 93 zeigt und um 20 Bits weitergeschoben werden sollen, führt eine Ausführungsform der Vorrichtung oben stehende mathematische Operation aus, wobei $r_i + l = 93 + 20 = 113$ und 113 mod 110 = 13 ist. Danach zeigt $r_i$ also auf das 13. Bit von R.

Nach Ausführungsformen der Erfindung weist die Vorrichtung einen Datenträger und einen Computer auf. Der Computer weist einen ersten Prozessor zur Ausführung eines ersten Programms zur Verschlüsselung von Daten und eine erste Schnittstelle zur Kommunikation mit dem Datenträger auf. Der Datenträger weist zumindest eine erste Menge von Daten auf, die zumindest eine Bitfolge aufweist, die für die XOR-Verschlüsselung verwendet wird. Bei dem Datenträger kann es sich beispielsweise um einen USB-Stick oder um eine Festplatte oder ein sonstiges Speichermedium handeln. Vorzugsweise wird die erste Menge von Daten von einer vertrauenswürdigen Stelle auf den Datenträger übertragen. Dies kann nicht unverschlüsselt über ein nicht-vertrauenswürdiges Übertragungsmedium geschehen, da sonst die für die Verschlüsselung verwendeten Zeiger und Bitfolgen von unbefugten Personen ausgelesen werden können.

Nach Ausführungsformen der Erfindung weist der Datenträger einen zweiten Prozessor zur Ausführung eines zweiten Programms zur Verschlüsselung von Daten auf. Ferner weist der Datenträger eine zweite Schnittstelle zur Kommunikation mit dem Computer auf und ist ausgebildet, um extern über die zweite Schnittstelle an den Computer angeschlossen zu werden. Vorzugsweise ist das zweite Programm ausgebildet, um die erste Menge von Daten symmetrisch zu verschlüsseln und die symmetrisch verschlüsselte erste Menge von Daten über die zweite Schnittstelle an den Computer zu senden. Das erste Programm im Computer ist ausgebildet, um die symmetrisch verschlüsselte erste Menge von Daten über die erste Schnittstelle zu empfangen, in einem Speicher zu speichern und zu entschlüsseln. Vorzugsweise beinhaltet die erste Menge von Daten die Bitfolgen R und $A_{i,j}$ sowie die Zeiger $r_i$ und $a_j$. Vorzugsweise befindet sich im Computer ein Speicher, der zumindest eine zweite Menge von Daten aufweist. Diese zweite Menge von Daten kann beispielsweise eine Nachricht sein, die an einen Kommunikationspartner j gesendet werden soll. Hierfür verschlüsselt das erste Programm die zweite Menge von Daten mit Hilfe der ersten Menge von Daten symmetrisch. Dies geschieht beispielsweise nach dem AES-Verfahren, wobei der Schlüssel s aus der Bitfolge $A_{i,j}$ und dem Zeiger $a_j$ gebildet wird. Anschließend verschlüsselt das erste Programm die symmetrisch verschlüsselte zweite Menge von Daten mit Hilfe der Bitfolge R und dem Zeiger $r_i$ nach dem XOR-Verfahren.

Nach Ausführungsformen der Erfindung weist der Computer eine dritte Schnittstelle auf, die für den Empfang einer symmetrisch und nach dem XOR-Verfahren verschlüsselten dritten Menge von Daten ausgebildet ist. Die dritte Menge von Daten kann beispielsweise eine von einem Kommunikationspartner mit Hilfe einer erfindungsgemäßen Vorrichtung verschlüsselte Nachricht sein. Vorzugsweise ist das erste Programm ausgebildet, um die dritte Menge von Daten zu entschlüsseln. Beispielsweise geschieht dies mit der Bitfolge R, dem Zeiger $r_i$, der Bitfolge $A_{i,j}$ und dem Zeiger $a_j$.

Nach Ausführungsformen der Erfindung weist die Vorrichtung einen Zufallsgenerator mit Mitteln zur Erzeugung der ersten Menge von Daten und Mitteln zur Übertragung der ersten Menge von Daten auf. Vorzugsweise handelt es sich bei dem Zufallsgenerator um einen Hardware-Zufallsgenerator. Dies ist vorteilhaft, da ein Hardware-Zufallsgenerator Bitfolgen mit maximaler Entropie erzeugt. Vorzugsweise werden die Zufallsdaten aus einem physikalischen Prozess, z.B. radioaktiver Zerfall, thermisches Rauschen oder anderen physikalischen Quanteneffekten erzeugt. Eine so erzeugte Bitfolge weist eine maximale Entropie auf, da eine Vorhersage von zufällig auftretenden Quanteneffekten unmöglich ist.

Nach Ausführungsformen der Erfindung verfügt die Vorrichtung über einen zweiten Computer mit Mitteln zum Empfang der ersten Menge von Daten vom Zufallsgenerator und Mitteln zur Übertragung der Daten auf den Datenträger. Vorzugsweise handelt es sich bei dem zweiten Computer um einen Computer an einer absolut sicheren Stelle, um die Sicherheit zu gewährleisten. Der zweite Computer wird benötigt, um Daten vom Zufallsgenerator auf den Datenträger zu übertragen. Dies ist nötig, wenn eine erfindungsgemäße Vorrichtung mit den Bitfolgen $A_{i,j}$ und R und den Zeigern $a_j$ und ausgestattet werden soll. Dies kann der Fall sein, wenn eine Vorrichtung neu eingerichtet wird, wenn die Bitfolgen $A_{i,j}$ oder R aufgebraucht wurden oder wenn zu einem bestehenden Kreis von Kommunikationspartnern ein weiterer Kommunikationspartner hinzugefügt werden soll.

In einem weiteren Aspekt betrifft die Erfindung ein Computerprogrammprodukt, insbesondere digitales Speichermedium, zur verschlüsselten Kommunikation über ein Übertragungsmedium. Das Computerprogramm weist ausführbare Programminstruktionen auf zur Durchführung der folgenden Schritte: Auslesen einer zweiten Menge von Daten aus einem Speicher, symmetrische Verschlüsselung der zweiten Menge von Daten mit Hilfe einer ersten Menge von Daten aus dem Speicher, Verschlüsselung der symmetrisch verschlüsselten zweiten Menge von Daten mit Hilfe einer Bitfolge nach dem XOR-Verfahren.

Die Bitfolge, die für die Verschlüsselung nach dem XOR-Verfahren verwendet wird, weist maximale Entropie auf. Für die Erzeugung eines Schlüssels wird nur ein Abschnitt aus der Bitfolge verwendet. Für aufeinander folgende Verschlüsselungen werden variierende Abschnitte der Bitfolge verwendet. Die zweifach verschlüsselte zweite Menge von Daten wird über ein Übertragungsmedium an einen Empfänger gesendet.

Nach Ausführungsformen der Erfindung ist es möglich, für die Verschlüsselung nach dem XOR-Verfahren eine Bitfolge R zu verwenden, bei der jeder Abschnitt nur einmal für eine Verschlüsselung verwendet wird. Dies erhöht den Sicherheitsstandard. Alternativ kann die Bitfolge R so ausgestaltet sein, dass Teile der für die Verschlüsselung verwendeten Abschnitte für andere Verschlüsselungen wiederverwendet werden. Die ist vorteilhaft, da sich die Bitfolge R so nicht verbraucht und nicht nach einer bestimmten Anzahl von durchgeführten Verschlüsselungen ausgetauscht werden muss.

Nach Ausführungsformen wird jeder Abschnitt der Bitfolgen $A_{i,j}$ nur einmal für eine Verschlüsselung verwendet, sodass die Bitfolgen nach einer bestimmten Anzahl von durchgeführten Verschlüsselungen ausgetauscht werden müssen. Bei dieser Gelegenheit werden vorzugsweise auch neue Zeiger $a_j$ und $r_i$ und eine neue Bitfolge R auf dem Speichermedium gespeichert.

Nach Ausführungsformen der Erfindung ist das Computerprogrammprodukt dazu ausgebildet, eine zweifach verschlüsselte dritte Menge von Daten zu empfangen, mit Hilfe der ersten Menge von Daten zu entschlüsseln und im Speicher zu speichern. Dies ist vorteilhaft, wenn durch ein erfindungsgemäßes Computerprogrammprodukt von einem anderen Kommunikationspartner eine zweifach verschlüsselte Menge von Daten empfangen wird. Diese lässt sich erfindungsgemäß mit Hilfe der ersten Menge von Daten entschlüsseln und im Speicher speichern. Vorzugsweise geschieht die Entschlüsselung mit den Bitfolgen $A_{i,j}$ und R sowie mit den Zeigern $a_j$ und $r_i$ nach dem AES- bzw. nach dem XOR-Verfahren.

Im Weiteren werden Ausführungsformen der Erfindung mit Bezugnahme auf die Zeichnungen näher erläutert. Es zeigen:

Figur 1      eine schematische Darstellung eines Netzwerks, das n erfindungsgemä- ße Vorrichtungen beinhaltet;

Figur 2      eine schematische Darstellung einer erfindungsgemäßen Vorrichtung;

Figur 3      ein Blockdiagramm über die Erzeugung der ersten Menge von Daten;

Figur 4      ein Blockdiagramm über die Verschlüsselung von Daten;

Figur 5      ein Blockdiagramm über den Empfang und die Entschlüsselung von ver- schlüsselten Daten;

Figur 6      ein Blockdiagramm über die Verschlüsselung einer Nachricht und

Figur 7      ein Blockdiagramm einer erfindungsgemäßen Vorrichtung mit Zufallsge- nerator.

Elemente der nachfolgenden Figuren, die einander entsprechen, sind mit denselben Bezugszeichen gekennzeichnet.

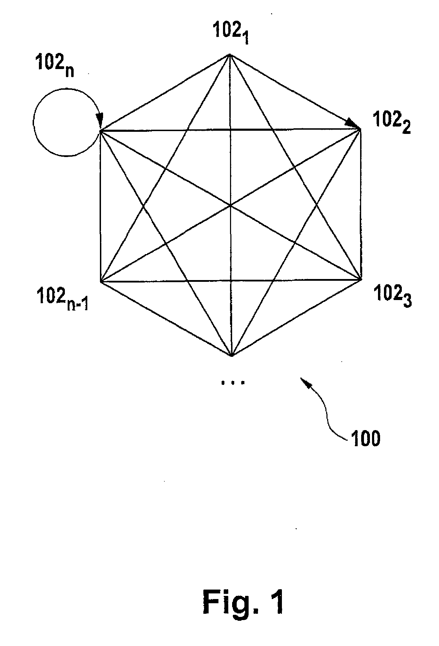

Figur 1 zeigt eine schematische Ansicht eines Netzwerks 100 mit mehreren erfindungsgemäßen Vorrichtungen $102_1$ - $102_n$. Jede erfindungsgemäße Vorrichtung $102_i$ ist mit jeder anderen erfindungsgemäßen Vorrichtung $102_j$ in dem Netzwerk 100 verbunden. Eine Kommunikation ist von jeder erfindungsgemäßen Vor-

richtung $102_i$ im Netzwerk 100 zu jeder anderen erfindungsgemäßen Vorrichtung $102_j$ im Netzwerk 100 möglich. Ferner verfügt die erfindungsgemäße Vorrichtung $102_n$ über einen Speicher, um Daten, die von der Vorrichtung $102_n$ verschlüsselt wurden, in dem Speicher abzuspeichern. Zu einem späteren Zeitpunkt können die Daten wieder von der Vorrichtung $102_n$ entschlüsselt werden.

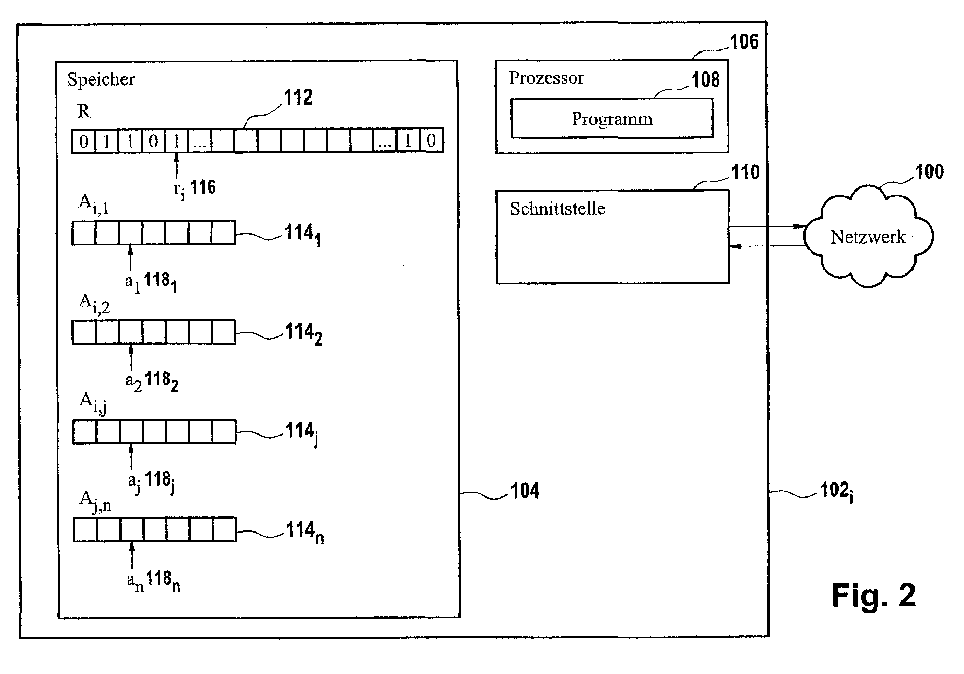

Figur 2 zeigt ein Blockdiagramm einer erfindungsgemäßen Vorrichtung $102_i$. Die erfindungsgemäße Vorrichtung $102_i$ weist einen Speicher 104, einen Prozessor 106, ein ausführbares Programm 108 und eine Schnittstelle 110 auf. Im Speicher sind die Bitfolgen R 112, die Bitfolgen $A_{i,1}$ $114_1$ bis $A_{i,n}$ $114_n$ und die jeweils zugehörigen Zeiger $r_i$ 116 und $a_1$ $118_1$ bis $a_n$ $118_n$ gespeichert.

Erfindungsgemäß zeigt der Zeiger $a_1$ $118_i$ auf eine Stelle der Bitfolge $A_{i,1}$ $114_1$, der Zeiger $a_2$ $118_2$ auf eine Stelle der Bitfolge $A_{i,2}$ $114_2$, der Zeiger $a_j$ $118_j$ auf eine Stelle der Bitfolge $A_{i,j}$ $114_j$ und der Zeiger an $118_n$ auf eine Stelle der Bitfolge $A_{i,n}$ $114_n$. Der Zeiger $r_i$ 116 zeigt auf eine Stelle der Bitfolge R 112. Der Prozessor 106 ist ausgebildet, um ein Programm 108 auszuführen. Das Programm 108 kann mit Hilfe der Bitfolgen R 112 und $A_{i,1}$ $114_1$ bis $A_{i,n}$ $114_n$ und den dazugehörigen Zeigern $r_i$ 116 und $a_1$ $118_1$ bis $a_n$ $118_n$ Daten ver- und entschlüsseln. Die verschlüsselten Daten können über die Schnittstelle 110 an ein Netzwerk 100 gesendet werden, indem sich der Empfänger befindet. Zu entschlüsselnde Daten können aus dem Netzwerk 100 über die Schnittstelle 110 empfangen werden.

Im Betrieb werden Daten von der erfindungsgemäßen Vorrichtung $102_i$ ver- und entschlüsselt. Die Daten werden dazu zunächst mit Hilfe der passenden Bitfolge $A_{i,j}$ $114_j$ und dem dazugehörigen Zeiger $a_j$ $118_j$ symmetrisch verschlüsselt, wenn sie an den Empfänger $102_j$ versendet werden sollen. Diese Verschlüsselung kann mit Hilfe des AES-Verfahrens durchgeführt werden, indem der Schlüssel aus der Bitfolge $A_{i,j}$ $114_j$ erstellt wird. Der Zeiger $a_j$ $118_j$ gibt an, an welcher Stelle der Bitfolge $A_{i,j}$ $114_j$ der Schlüssel beginnen soll. Die Länge des Schlüssels muss vorher definiert sein und dem Kommunikationspartner $102_j$ bekannt sein. Die symmetrisch verschlüsselten Daten werden nochmals mit der Bitfolge R 112 und dem Zeiger $r_i$ 116 nach dem XOR-Verfahren verschlüsselt. Beide Verschlüsselungen werden durch das vom Prozessor 106 ausführbare Programm 108 durchgeführt. Über die Schnittstelle 110 werden die verschlüsselten Daten an das Netzwerk 100 übertragen, in dem sich der Kommunikationspartner $102_j$ befindet.

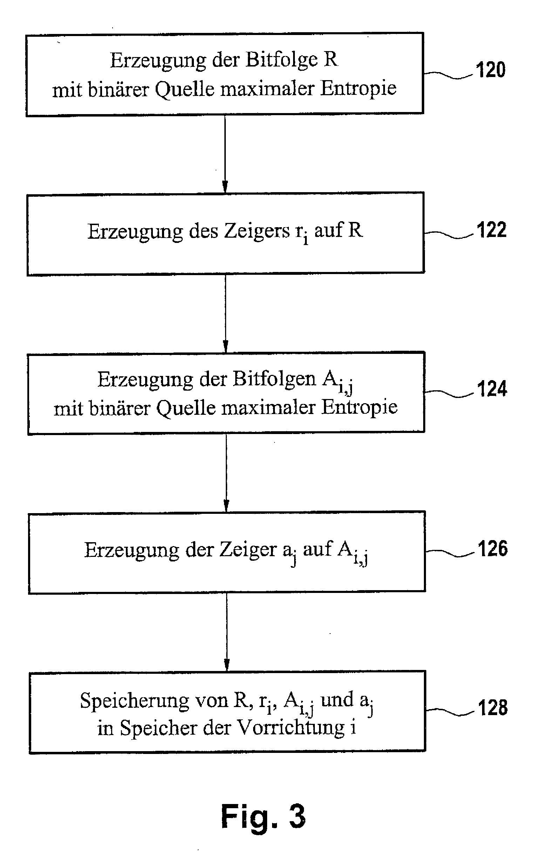

Figur 3 zeigt ein Blockdiagramm, das die Erstellung der Bitfolgen $A_{i,j}$ $114_j$ und R 112 sowie der dazugehörigen Zeiger $a_j$ $118_j$ und $r_i$ 116 mit einem Zufallsgenerator beschreibt. Zunächst wird im Zufallsgenerator eine Bitfolge R erzeugt 120. Dies erfolgt mit einer binären Quelle maximaler Entropie, zum Beispiel ein Geigerzähler, der nah an einer radioaktiven Quelle angebracht ist und in bestimmten Zeitabständen ein Bit der Bitfolge erzeugt; er erzeugt eine 1, wenn in dem besagten Zeitraum ein radioaktiver Zerfall detektiert wurde und eine 0, wenn in dem besagten Zeitraum kein radioaktiver Zerfall detektiert wurde. Da für die Verschlüsselung einer Nachricht mit Hilfe des eXclusive OR-Verfahrens mit R ein Schlüssel benötigt wird, der die gleiche Länge aufweist wie die zu verschlüsselnde Nachricht, ist es nötig, dass R eine hinreichende Länge aufweist. Prinzipiell ist jeder quantenmechanischer Prozess ein Prozess mit maximaler Entropie, da eine Voraussage der Ereignisse nicht möglich ist.

Nachdem die Bitfolge R mit maximaler Entropie erzeugt wurde, wird der Zeiger $r_i$ auf R erzeugt 122. $r_i$ gibt an, an welcher Stelle der Bitfolge R der Schlüssel, der zur Verschlüsselung nach dem XOR-Verfahren verwendet wird, beginnt.

Anschließend werden die Bitfolgen $A_{i,j}$ mit der binären Quelle maximaler Entropie erzeugt 124. Die Bitfolgen $A_{i,j}$ werden später von der Vorrichtung für die symmetrische Verschlüsselung, beispielsweise nach dem AES-Verfahren, verwendet. Für dieses Verfahren werden üblicherweise Schlüssel der Länge von 256 Bit verwendet. Daher weisen die Bitfolgen $A_{i,j}$ üblicherweise eine kürzere Länge als die Bitfolge R auf.

Im darauffolgenden Schritt 126 werden die Zeiger $a_j$ auf $A_{i,j}$ erzeugt. Dies kann durch den Zufallsgenerator oder durch einen Computer geschehen. Jeder Zeiger $a_j$ zeigt auf ein bestimmtes Bit der dazugehörigen Bitfolge $A_{i,j}$. Dies ist das erste Bit, was für die Gewinnung des für die erste Verschlüsselung verwendeten Schlüssels verwendet wird. Zur Kommunikation mehrerer erfindungsgemäßer Vorrichtungen miteinander werden n-1 verschiedene $A_{i,j}$ und n-1 $a_j$ benötigt. Ausführungsformen der erfindungsgemäßen Vorrichtungen verfügen über Mittel, um Daten erfindungsgemäß symmetrisch und nach dem XOR-Verfahren zu verschlüsseln. Diese Ausführungsformen benötigen n verschiedene $A_{i,j}$ und n $a_j$.

Anschließend werden R, $r_i$, $A_{i,j}$ und $a_j$ im Speicher der Vorrichtung i gespeichert 128.

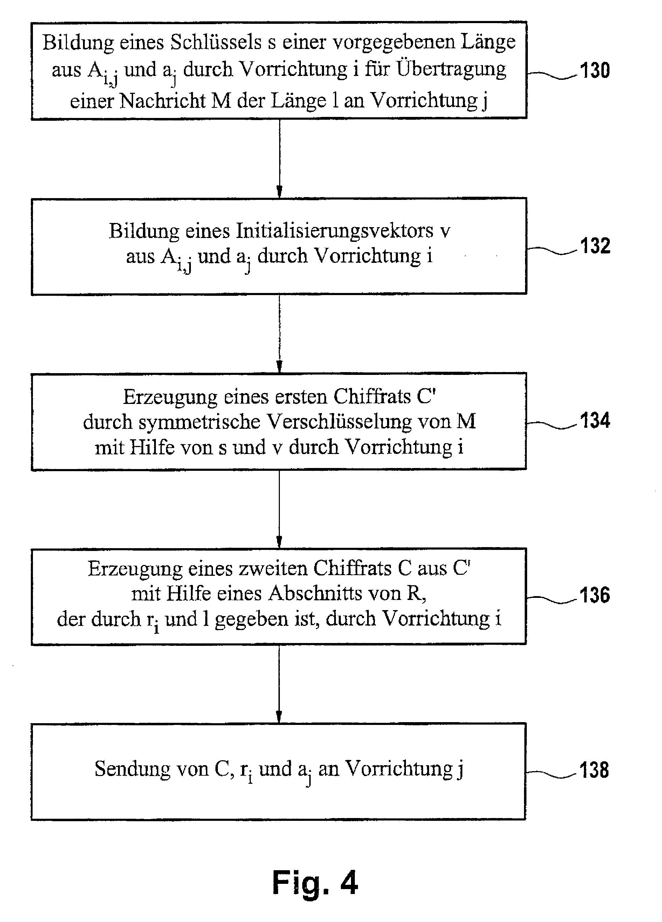

Figur 4 zeigt ein Blockdiagramm über den Ablauf einer Verschlüsselung einer Nachricht M der Länge l, die an die Vorrichtung j gesendet werden soll, in der Vorrichtung i. Im ersten Schritt 130 wird ein Schlüssel s gebildet, der durch eine vorgegebene Länge, $a_j$ und $A_{i,j}$ gegeben ist. Der Schlüssel s besteht aus einem Abschnitt der Bitfolge $A_{i,j}$, die bei dem Bit beginnt, auf das der Zeiger $a_j$ zeigt. Die Länge des Schlüssels ist vordefiniert und beträgt üblicherweise 256 Bit.

Anschließend wird ein Initialisierungsvektor v, der für die symmetrische Verschlüsselung beispielsweise nach dem AES-Verfahren benötigt wird, aus $A_{i,j}$ und $a_j$ durch die Vorrichtung i gebildet 132. Der Initialisierungsvektor v beginnt direkt bei dem Bit der Bitfolge $A_{i,j}$, das auf das Bit folgt, welches als letztes für die Bildung des Schlüssels s verwendet wurde. Üblicherweise beträgt die Länge des Initialisierungsvektors die Hälfte der Schlüssellänge.

Im Schritt 134 erzeugt die Vorrichtung i ein erstes Chiffrat C' durch die symmetrische Verschlüsselung der Nachricht M mit Hilfe des Schlüssels s und des Initialisierungsvektors v. Vorzugsweise wird diese symmetrische Verschlüsselung nach dem AES-Verfahren durchgeführt.

Im nächsten Schritt 136 wird ein zweites Chiffrat C aus C' durch die Vorrichtung i erzeugt. Dies geschieht mit Hilfe eines Abschnitts der Bitfolge R, der durch $r_i$ und I gegeben ist. Diese Verschlüsselung geschieht nach dem XOR-Verfahren (exklusives Oder). Die Schlüssellänge muss hierfür der Länge I der Nachricht M entsprechen. Durch den Zeiger $r_i$, der auf ein bestimmtes Bit der Bitfolge R zeigt, ist der Schlüssel also festgelegt, dadurch dass die Länge I des Schlüssels von vornherein durch die Länge I der Nachricht M definiert ist.

Anschließend werden das zweite Chiffrat C, die Zeiger $r_i$ und $a_j$ an die Vorrichtung j gesendet 138.

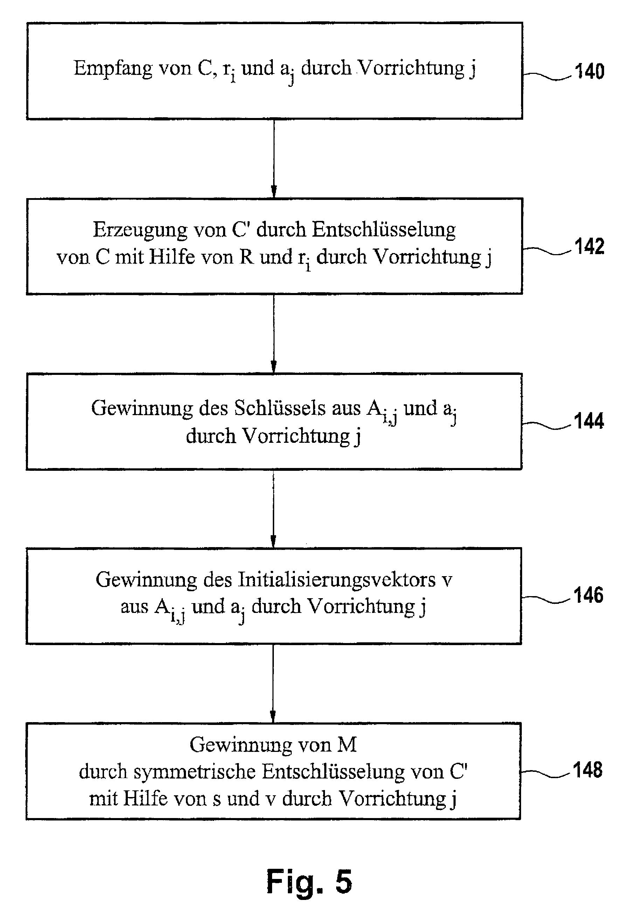

Figur 5 zeigt ein Blockdiagramm über die Entschlüsselung einer Nachricht M durch die Vorrichtung j, die von einer Vorrichtung i empfangen wurde. Die Vorrichtung j empfängt von der Vorrichtung i das doppelt verschlüsselte Chiffrat C, den Zeiger $r_i$ auf R und den Zeiger $a_j$ auf $A_{i,j}$ 140. Die Bitfolgen R und $A_{i,j}$ sind bereits in der Vorrichtung j gespeichert.

In Schritt 142 wird das Chiffrat C' durch die Entschlüsselung von C mit Hilfe der Bitfolge R und dem Zeiger $r_i$ erzeugt. Dies geschieht genau wie die Verschlüsselung durch das XOR-Verfahren. Die Länge des benötigten Schlüssels ergibt sich aus der Länge des Chiffrats C. Der für die Entschlüsselung benötigte Schlüssel besteht aus einem Abschnitt aus der Bitfolge R, der bei dem Bit beginnt, auf das der Zeiger $r_i$ zeigt und dessen Länge mit der Länge I des Chiffrats C übereinstimmt.

Nachdem das Chiffrat C' durch die Vorrichtung j erzeugt wurde, wird in Schritt 144 der Schlüssel aus der Bitfolge $A_{i,j}$ und dem Zeiger $a_j$ durch die Vorrichtung j gewonnen. Er beginnt bei dem Bit der Bitfolge $A_{i,j}$, auf das der Zeiger $a_j$ zeigt und hat eine vordefinierte Länge, vorzugsweise 256 Bit. Das Chiffrat C' wird also mit dem gleichen Schlüssel entschlüsselt, mit dem es vorher von der Vorrichtung i in Figur 4 verschlüsselt wurde.

Anschließend wird durch die Vorrichtung j der Initialisierungsvektor v aus der Bitfolge $A_{i,j}$ und dem Zeiger $a_j$ gewonnen 146. Der Initialisierungsvektor v beginnt bei dem Bit, das auf das Bit folgt, welches als letztes für den Schlüssel s verwendet wurde. Auch die Länge des Initialisierungsvektors v ist vordefiniert und beträgt üblicherweise die Hälfte der Länge des verwendeten Schlüssels. Für die Entschlüsselung wird also der gleiche Initialisierungsvektor v benutzt wie er in Figur 4 durch die Vorrichtung i für die Verschlüsselung verwendet wurde.

Anschließend wird in Schritt 148 die Nachricht M durch symmetrische Entschlüsselung von C' mit Hilfe des Schlüssels s und des Initialisierungsvektors v durch die Vorrichtung j gewonnen. Vorzugsweise geschieht dies nach dem AES-Verfahren. Der Schlüssel s und der Initialisierungsvektor v wurden aus der Bitfolge $A_{i,j}$ mit Hilfe des Zeigers $a_j$ gewonnen und sind identisch mit dem zur Verschlüsselung verwendeten Schlüssel s und dem zur Verschlüsselung verwendeten Initialisierungsvektor v.

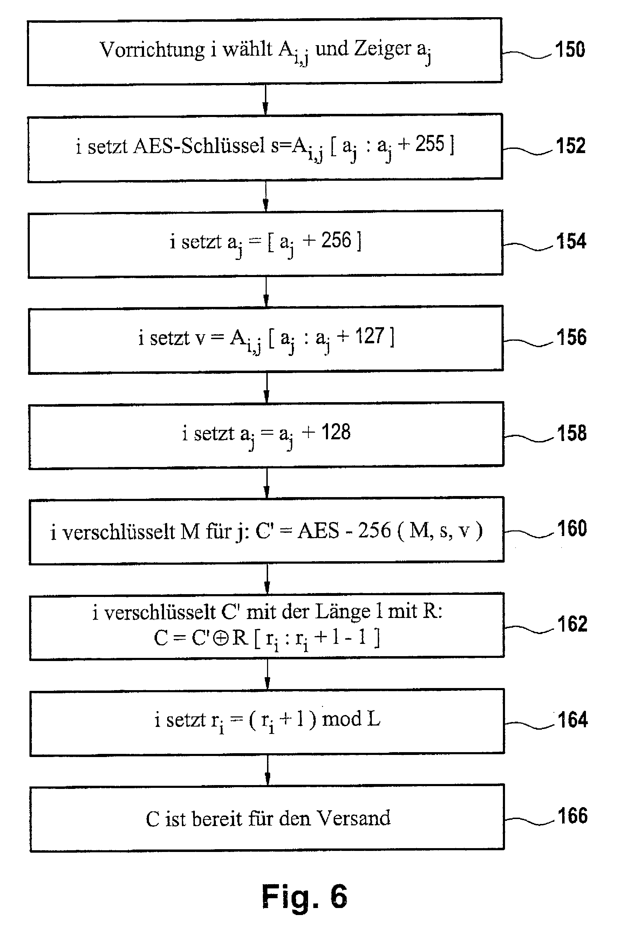

Figur 6 zeigt ein Blockdiagramm über den Ablauf einer erfindungsgemäßen Verschlüsselung. Für die Verschlüsselung einer Nachricht M, die an die Vorrichtung j gesendet werden soll, wählt die Vorrichtung i die Bitfolge $A_{i,j}$ und den Zeiger $a_j$ 150.

Im Schritt 152 setzt die Vorrichtung i einen AES-Schlüssel s:

$$s = A_{i,j}[a_j : a_j + 255]$$

Der Schlüssel s besteht hier aus 256 Bit und beginnt bei dem Bit der Bitfolge $A_{i,j}$, auf das der Zeiger $a_j$ zeigt. Die Länge von 256 Bit ist vordefiniert und der Vorrichtung j, an die die Nachricht M versendet wird, bekannt. Die Vorrichtung i verwendet den Abschnitt der Bitfolge $A_{i,j}$, der für die Gewinnung des Schlüssels s verwendet wurde, nicht mehr weiter in zukünftigen Verschlüsselungen. So wird ein jeder Abschnitt der Bitfolge $A_{i,j}$ maximal zweimal verwendet, einmal bei der Verschlüsselung einer Nachricht, die an j gesendet werden soll, durch i und ein zweites Mal bei der Verschlüsselung einer Nachricht, die an i gesendet werden soll, durch j.

Da der ursprünglich gewählte Zeiger $a_j$ nicht zwangsläufig auf das erste Bit der Bitfolge $A_{i,j}$ gezeigt hat, wird bei Erreichen des Endes der Bitfolge $A_{i,j}$ das Intervall am Anfang der Bitfolge $A_{i,j}$ für die Gewinnung des Schlüssels fortgesetzt, falls der Anfang noch nicht für eine Verschlüsselung verwendet wurde.

Anschließend wählt die Vorrichtung i einen neuen Zeiger $a_j$ 154.

$$a_j = a_j + 256$$

In Schritt 156 wählt die Vorrichtung i den für die Verschlüsselung nach dem AES-Verfahren benötigten Initialisierungsvektor v:

$$v = A_{i,j}[a_j : a_j + 127]$$

Der Initialisierungsvektor v ist also halb so lang wie der AES-Schlüssel s und beginnt mit dem Bit, das als erstes nicht mehr für die Gewinnung des Schlüssels s verwendet wurde.

Für eine zukünftige Verschlüsselung einer Nachricht an die Vorrichtung j wird der Zeiger $a_j$ auf das Bit vorgerückt, das als erstes noch nicht für die Gewinnung des Schlüssels oder des Initialisierungsvektors v verwendet wurde 158.

$$a_j = a_j + 128$$

In Schritt 160 verschlüsselt i mit Hilfe des Schlüssels s und des Initialisierungsvektors v die für j bestimmte Nachricht M nach dem AES-Verfahren und gewinnt so ein erstes Chiffrat C':

$$C' = AES - 256(M, s, v)$$

Anschließend wird C' von i nach dem XOR-Verfahren mit der Bitfolge R verschlüsselt 162. Der aus R gewonnene Schlüssel beginnt bei dem Bit der Bitfolge R, auf das der Zeiger $r_i$ zeigt und hat die Länge I, die mit der Länge des Chiffrats C' übereinstimmt. Das Resultat C ist also eine doppelt verschlüsselte Nachricht.

$$C = C' \oplus R[r_i : r_i + l - 1]$$

Anschließend wird ein neuer Zeiger $r_i$ gewählt 164. Er zeigt auf das Bit, das als erstes nicht mehr für die Verschlüsselung der Nachricht verwendet wurde. Die Vorrichtung i ist ausgebildet um einen Teil des Abschnitts der Bitfolge R, der für die Verschlüsselung verwendet wurde, für verschiedene Verschlüsselungen erneut zu verwenden. Alternativ ist auch möglich, dass jeder Abschnitt von R nur einmal für eine Verschlüsselung verwendet wird und danach verbraucht ist. In beiden Fällen ist es vorteilhaft, wenn der Zeiger $r_i$ nach Erreichen des Endes der Bitfolge R wieder an den Anfang gesetzt wird. Falls jeder Abschnitt von R nur einmalig verwendet wird, ist dies vorteilhaft, weil der Zeiger $r_j$ sich bei der ersten Verschlüsselung nicht zwangsläufig am Anfang der Bitfolge befunden haben muss. Dies lässt sich durch die Verwendung von Modulo erreichen:

$$r_i = (r_i + l) \bmod L$$

L ist die Länge der Bitfolge R und I die Länge des verwendeten Abschnitts von R zur Verschlüsselung. Nach der obigen Formel wird $r_i$ an den Anfang von R gesetzt, wenn $r_i$ das Ende von R erreicht hat.

Anschließend ist die doppelt verschlüsselte Nachricht C bereit für den Versand an j 166.

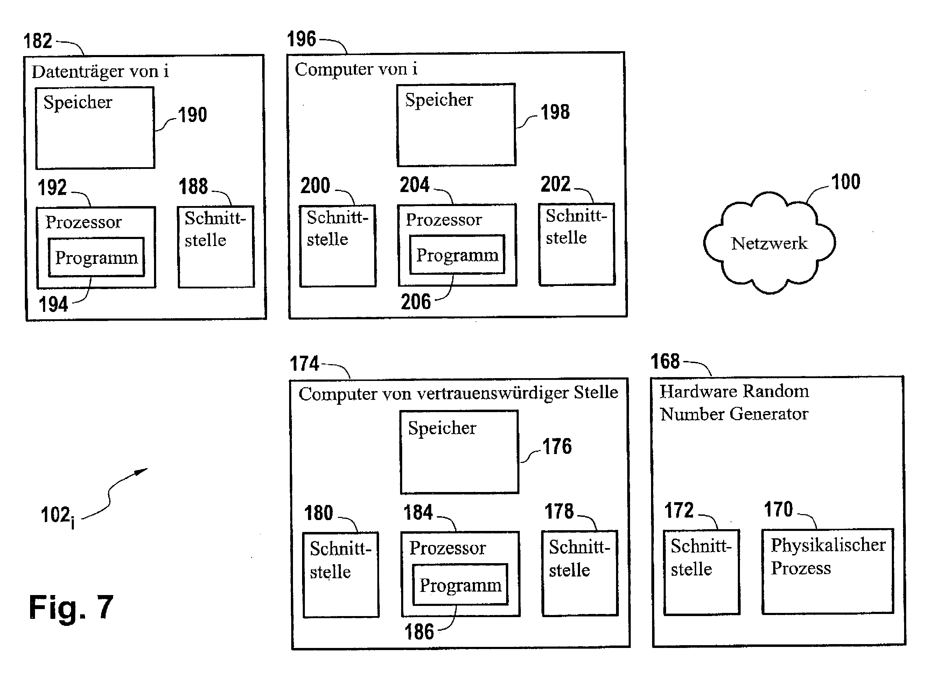

Figur 7 zeigt eine schematische Darstellung einer erfindungsgemäßen Vorrichtung $102_i$. In einem Zufallsgenerator 168 (Hardware Random Number Generator) läuft ein physikalischer Prozess maximaler Entropie 170 ab. Ferner verfügt der Zufallsgenerator 168 über eine Schnittstelle 172 zur Kommunikation mit einem Computer 174, der an einer vertrauenswürdigen Stelle lokalisiert ist. Der Computer 174 verfügt über einen Speicher 176, eine Schnittstelle 178 zur Kommunikation mit dem Zufallsgenerator 168, eine zweite Schnittstelle 180 zur Kommunikation mit dem Datenträger 182 und einen Prozessor 184, der ausgebildet ist, um ein Programm 186 auszuführen. Das Programm 186 ist ausgebildet, um die Bitfolge aus dem Zufallsgenerator 168 auszulesen, im Speicher 176 abzuspeichern und über die Schnittstelle 180 an den Datenträger 182 auszugeben.

Der Datenträger 182 weist eine Schnittstelle 188 auf zur Kommunikation mit verschiedenen Computern. Ferner befindet sich ein Speicher 190 im Datenträger 182 und ein Prozessor 192, der dazu ausgebildet ist, das Programm 194 auszuführen. Das Programm 194 ist ausgebildet, um über die Schnittstelle 188 empfangene Daten zu verschlüsseln, im Speicher abzuspeichern und zu entschlüsseln.

Ferner weist die Vorrichtung einen Computer 196 auf, der einen Speicher 198, zwei Schnittstellen 200 und 202 sowie einen Prozessor 204 aufweist. Der Prozessor 204 ist ausgebildet, um ein Programm 206 auszuführen. Die Schnittstelle 200 dient zur Kommunikation mit dem Datenträger 182. Die Schnittstelle 202 dient zur Kommunikation mit dem Netzwerk 100. Das Programm 206 ist ausgebildet, um Daten aus dem Netzwerk 100 zu empfangen, zu entschlüsseln und abzuspeichern. Ferner ist das Programm ausgebildet, um Daten erfindungsgemäß doppelt zu verschlüsseln und an eine andere erfindungsgemäße Vorrichtung im Netzwerk 100 zu senden. Ferner ist das Programm 206 ausgebildet, um nach einer Passworteingabe durch einen Benutzer den Speicher 190 des Datenträgers 182 auszulesen und zu entschlüsseln.

Im Betrieb generiert zunächst der Zufallsgenerator 168 eine Bitfolge maximaler Entropie durch den physikalischen Prozess 170. Dies kann beispielsweise ein radioaktiver Zerfall sein. Das durch den Prozessor 184 ausführbare Programm 186 liest über die Schnittstellen 172 und 178 des Computers 174 und des Zufallsgenerators 168 die Bitfolge aus und speichert diese im Speicher 176 ab. Erfindungsgemäß handelt es sich bei den erzeugten Bitfolgen um die Bitfolgen $A_{i,j}$ und R. Für die Bitfolge $A_{i,j}$ wird ein Zeiger $a_j$ vom Programm 186 erzeugt und im Speicher abgespeichert, für die Bitfolge R wird ein Zeiger $r_i$ vom Programm 186 erzeugt und im Speicher 176 abgespeichert. Üblicherweise ist die Bitfolge $A_{i,j}$ kürzer als die Bitfolge R, da die Bitfolge $A_{i,j}$ für ein symmetrisches Verschlüsselungsverfahren nach dem AES-Verfahren verwendet wird und die Bitfolge R für eine Verschlüsselung nach dem XOR-Verfahren. Für die Verschlüsselung nach dem XOR-Verfahren wird ein Schlüssel benötigt, dessen Länge der Länge der Nachrichten entspricht, während für die Verschlüsselung nach dem AES-Verfahren ein Schlüssel vordefinierter Länge, vorzugsweise 256 Bit, benötigt wird. Der Datenträger 182 wird über die Schnittstellen 188 und 180 mit dem Computer 174 verbunden. Das Programm 186 sendet die Bitfolgen und Zeiger aus dem Speicher 176 an den Datenträger 182. Der Prozessor 193 des Datenträgers 182 führt das Programm 194 aus, das die empfangenen Daten verschlüsselt im Speicher 190 abspeichert. Anschließend wird der Datenträger 182 über Schnittstellen 188 und 200 mit dem Computer 196 verbunden. Das vom Prozessor 204 ausgeführte Programm 206 liest nach einer durch den Benutzer erfolgten Passworteingabe den Speicher 190 des Datenträgers 182 aus und speichert die Bitfolgen $A_{i,j}$ und R sowie die Zeiger $a_j$ und $r_i$ im Speicher 198. Die Vorrichtung $102_i$ ist nun bereit, Daten erfindungsgemäß zu verschlüsseln. Zunächst werden die Daten mit Hilfe des vom Prozessor 204 ausgeführten Programms 206 und der Bitfolge $A_{i,j}$ und dem Zeiger $a_j$ nach dem AES-Verfahren symmetrisch verschlüsselt. Anschließend werden die symmetrisch verschlüsselten Daten mit einem Schlüssel, der aus der Bitfolge R mit Hilfe des Zeigers $r_i$ gewonnen wird, nach dem XOR-Verfahren verschlüsselt. Dieser Schritt ermöglicht es, die Daten durch das nicht vertrauenswürdige Netzwerk 100 an einen Empfänger zu senden, ohne dass die Gefahr besteht, dass die Daten in der Zukunft entschlüsselt werden könnten. Damit der Empfänger die Nachricht erfolgreich entschlüsseln kann, sendet die Vorrichtung $102_i$ mit der doppelt verschlüsselten Nachricht den verwendeten Zeiger $r_i$ und den verwendeten Zeiger $a_j$ mit. Der Empfänger verfügt bereits über die Bitfolgen $A_{i,j}$ und R.

**Bezugszeichenliste**

| | |
|---|---|
| 100 | Netzwerk |
| $102_{1-n}$ | Vorrichtung 1 - n |
| 104 | Speicher |
| 106 | Prozessor |
| 108 | Programm |
| 110 | Schnittstelle |
| 112 | Bitfolge R |
| $114_{1-n}$ | Bitfolge $A_{i1-n}$ |
| 116 | Zeiger $r_i$ |
| $118_{1-n}$ | Zeiger $a_{1-n}$ |
| 120 | Erzeugung von R |
| 122 | Erzeugung von $r_i$ |
| 124 | Erzeugung von $A_j$ |
| 126 | Erzeugung von $a_j$ |
| 128 | Speicherung von R, $r_i$, $A_j$ und $a_j$ |
| 130 | Bildung des Schlüssels s |
| 132 | Bildung des Initialisierungsvektors v |
| 134 | Erzeugung des Chiffrats c' |
| 136 | Erzeugung des Chiffrats c |
| 138 | Sendung von C, $r_i$, $a_j$ |
| 140 | Empfang von C, $r_j$, $a_j$ |
| 142 | Erzeugung von c' |
| 144 | Gewinnung des Schlüssels s |
| 146 | Gewinnung des Initialisierungsvektors v |
| 148 | Gewinnung der Nachricht m |
| 150 | Wahl der Bitfolge $A_{i,j}$ und des Zeigers $a_j$ |
| 152 | Setzung des Schlüssels s |
| 154 | Setzung des Zeigers $a_j$ |
| 156 | Setzung des Initialisierungsvektors v |
| 158 | Setzung des Zeigers $a_j$ |
| 160 | Verschlüsselung nach dem AES-Verfahren |
| 162 | Verschlüsselung nach dem XOR-Verfahren |
| 164 | Setzung des Zeigers $r_i$ |
| 166 | c bereit für Versand |
| 168 | Zufallsgenerator |
| 170 | physikalischer Prozess |
| 172 | Schnittstelle |
| 174 | vertrauenswürdiger PC |
| 176 | Speicher |
| 178 | Schnittstelle |
| 180 | Schnittstelle |
| 182 | Datenträger |
| 184 | Prozessor |
| 186 | Programm |
| 188 | Schnittstelle |
| 190 | Speicher |
| 192 | Prozessor |
| 194 | Programm |
| 196 | Computer |
| 198 | Speicher |
| 200 | Schnittstelle |
| 202 | Schnittstelle |
| 204 | Prozessor |
| 206 | Programm |

**Patentansprüche**

1.  Vorrichtung zur Verschlüsselung von Daten mit

    - Mitteln zur symmetrischen Verschlüsselung von Daten mit einer ersten Bitfolge;
    - Mitteln zur Verschlüsselung der symmetrisch verschlüsselten Daten mit Hilfe einer zweiten Bitfolge (112), wobei

      ■ die Bitfolgen maximale Entropie aufweisen;
      ■ die Mittel zur Verschlüsselung der symmetrisch verschlüsselten Daten so ausgebildet sind, dass

        • für eine Verschlüsselung ein Abschnitt aus der zweiten Bitfolge verwendet wird; und

    aufeinanderfolgende Verschlüsselungen mit variierenden Abschnitten der zweiten Bitfolge durchgeführt werden, wobei die zweite Bitfolge unverändert bleibt, wobei die Mittel zur Verschlüsselung der symmetrisch verschlüsselten Daten mit Hilfe der zweiten Bitfolge einen Zeiger (116) aufweisen, wobei der Zeiger so ausgebildet ist, dass der für die Verschlüsselung verwendete Abschnitt der zweiten Bitfolge dort beginnt, wo der Zeiger hinzeigt,

mit einem Zufallsgenerator (168) mit Mitteln zur Erzeugung der ersten und zweiten Bitfolge, wobei der Zufallsgenerator die Bitfolgen aus einem quantenphysikalischen Prozess (170) erzeugt, wobei die symmetrische Verschlüsselung (160) entropieerhöhend ist, und mit Mitteln (202) zur Kommunikation über ein Übertragungsmedium (100), und mit

- Mitteln zur Entschlüsselung von Daten mit Hilfe der zweiten Bitfolge; und
- Mitteln zur Entschlüsselung von symmetrisch verschlüsselten Daten, wobei

die Vorrichtung einen Speicher (198) aufweist und dazu ausgebildet ist, die Daten zunächst zweifach verschlüsselt, im Speicher zu speichern und wieder zu entschlüsseln, und mit einem Datenträger (182) und einem Computer (196), wobei

- der Computer einen ersten Prozessor (204) zur Ausführung eines ersten Programms (206) zur Verschlüsselung von Daten und eine erste Schnittstelle (200) zur Kommunikation mit dem Datenträger aufweist; und
- der Datenträger zumindest die erste und zweite Bitfolge aufweist, und, wobei der Datenträger einen zweiten Prozessor (192) zur Ausführung eines zweiten Programms (194) zur Verschlüsselung von Daten, eine zweite Schnittstelle (188) zur Kommunikation mit dem Computer aufweist und ausgebildet ist, um extern über die zweite Schnittstelle an den Computer angeschlossen zu werden, und wobei
- das zweite Programm ausgebildet ist, um die erste und zweite Bitfolge symmetrisch zu verschlüsseln und die symmetrisch verschlüsselte erste und zweite Bitfolge über die zweite Schnittstelle an den Computer zu senden;
- der Computer einen Speicher (198) aufweist, der zumindest die zu verschlüsselnden Daten aufweist;
- das erste Programm ausgebildet ist, um die symmetrisch verschlüsselte erste und zweite Bitfolge über die erste Schnittstelle zu empfangen, im Speicher zu speichern und zu entschlüsseln;
- das erste Programm ausgebildet ist, um die Daten mit Hilfe der ersten Bitfolge symmetrisch zu verschlüsseln;
- das erste Programm für die Verschlüsselung der symmetrisch verschlüsselten Daten mit Hilfe der zweiten Bitfolge ausgebildet ist.

2. Vorrichtung nach Anspruch 1, wobei

- der Computer eine dritte Schnittstelle (202) aufweist, die für den Empfang von symmetrisch und mit Hilfe der Bitfolgen verschlüsselten Daten ausgebildet ist; und
- das erste Programm für die Entschlüsselung und Speicherung der zweifach verschlüsselten Daten ausgebildet ist.

3. Vorrichtung nach Anspruch 1 oder 2, mit einem zweiten Computer (174) mit Mitteln zum Empfang der ersten und zweiten Bitfolge vom Zufallsgenerator und Mitteln zur Übertragung der Bitfolgen auf den Datenträger.

**Claims**

1. Apparatus for encrypting data, having

- means for symmetrically encrypting data using a first bit string;
- means for encrypting the symmetrically encrypted data with the aid of a second bit string (112),

  ■ the bit strings having maximum entropy;
  ■ the means for encrypting the symmetrically encrypted data being designed in such a manner that

  • a section of the second bit string is used for encryption; and successive encryption operations are carried out with varying sections of the second bit string, the second bit string remaining unchanged,
  the means for encrypting the symmetrically encrypted data with the aid of the bit string having a pointer (116), the pointer being designed in such a manner that that section of the second bit string which is used for encryption begins where the pointer points, having a random number generator (168) with means for generating the first and second bit string, the random number generator generating the bit strings from a quantum physical process (170),

the symmetrical encryption (160) increasing the entropy, the apparatus
having means (202) for communicating via a transmission medium (100), and having

- means for decrypting data with the aid of the second bit string; and
- means for decrypting symmetrically encrypted data, the apparatus having a memory (198) and being designed to first of all twice-encrypt the data, to store the data in the memory and to decrypt the data again

, and having a data storage medium (182) and a computer (196),

- the computer having a first processor (204) for executing a first program (206) for encrypting data and a first interface (200) for communicating with the data storage medium; and the data storage medium having at least the first and the second bit string,

and the data storage medium having a second processor (192) for executing a second program (194) for encrypting data and a second interface (188) for communicating with the computer and being designed to be externally connected to the computer via the second interface, and

- the second program being designed to symmetrically encrypt the first and second bit string and to transmit the symmetrically encrypted first and second bit string to the computer via the second interface;
- the computer having a memory (198) having at least the data to be encrypted;
- the first program being designed to receive the symmetrically encrypted first and second bit string via the first interface, to store said set of data in the memory and to decrypt said set of data;
- the first program being designed to symmetrically encrypt data with the aid of the first bit string ;
- the first program being designed to encrypt the symmetrically encrypted data with the aid of the second bit string.

**2.** Apparatus according to Claim 1,

- the computer having a third interface (202) which is designed to receive data which is symmetrically encrypted and is encrypted with the aid of the bit strings; and
- the first program being designed to decrypt and store the twice-encrypted data.

**3.** Apparatus according to either of Claims 1 and 2, having a second computer (174) with means for receiving the data and the second bit string from the random number generator and means for transmitting the bit strings to the data storage medium.

## Revendications

**1.** Dispositif pour le cryptage de données, avec

- des moyens pour le cryptage symétrique de données avec une première série de bits ;
- des moyens pour le cryptage des données cryptées de façon symétrique, à l'aide d'une deuxième série de bits (112), où

■ les séries de bits présentent une entropie maximale ;
■ les moyens pour le cryptage des données cryptées de façon symétrique sont conçus de telle manière que

• une section de la deuxième série de bits est utilisée pour un cryptage ; et

des cryptages successifs sont effectués avec des sections variables de la deuxième série de bits, la deuxième série de bits restant inchangée,
dans lequel les moyens pour le cryptage des données cryptées de façon symétrique à l'aide de la deuxième série de bits comportent un indicateur (116), l'indicateur étant conçu de telle manière que la section de la deuxième série de bits utilisée pour le cryptage commence à l'endroit indiqué par l'indicateur,
avec un générateur aléatoire (168) avec des moyens pour la production de la première et de la deuxième série de bits, le générateur aléatoire produisant les séries de bits à partir d'un procédé de physique quantique (170),
dans lequel le cryptage symétrique (160) accroît l'entropie, et avec des moyens (202) pour la communication par le biais d'un moyen de transmission (100), et avec

- des moyens pour le décryptage de données à l'aide de la deuxième série de bits ; et
- des moyens pour le décryptage de données cryptées de façon symétrique, dans lequel

le dispositif comporte une mémoire (198), tout en étant conçu pour crypter les données tout d'abord en double, les stocker dans la mémoire, puis les décrypter à nouveau, et avec un support de données (182) et un ordinateur (196), dans lequel

- l'ordinateur comporte un premier processeur (204) pour l'exécution d'un premier programme (206) pour le cryptage de données, et une première interface (200) pour la communication avec le support de données ; et
- le support de données comporte au moins la première et la deuxième série de bits, et dans lequel le support de données comporte un deuxième processeur (192) pour l'exécution d'un deuxième programme (194) pour le cryptage de données, ainsi qu'une deuxième interface (188) pour la communication avec l'ordinateur, tout en étant conçu pour être raccordé de façon externe à l'ordinateur, par le biais de la deuxième interface, et dans lequel

- le deuxième programme est conçu pour crypter la première et la deuxième série de bits de façon symétrique, et pour envoyer les première et deuxième séries de bits cryptées de façon symétrique à l'ordinateur, par le biais de la deuxième interface ;

- l'ordinateur comporte une mémoire (198) comportant au moins les données à crypter ;

- le premier programme est conçu pour recevoir les première et deuxième séries de bits cryptées de façon symétrique par le biais de la première interface, les stocker dans la mémoire et les décrypter ;

- le premier programme est conçu pour crypter les données de façon symétrique à l'aide de la première série de bits ;

- le premier programme est conçu pour le cryptage des données cryptées de façon symétrique à l'aide de la deuxième série de bits.

2. Dispositif selon la revendication 1, dans lequel

- l'ordinateur comporte une troisième interface (202) conçue pour la réception de données cryptées de façon symétrique à l' aide des séries de bits ; et

- le premier programme est conçu pour le décryptage et le stockage des données cryptées en double.

3. Dispositif selon la revendication 1 ou 2, avec un deuxième ordinateur (174) avec des moyens pour la réception des première et deuxième séries de bits de la part du générateur aléatoire, et des moyens pour la transmission des séries de bits vers le support de données.

**Fig. 1**

Fig. 2

Erzeugung der Bitfolge R
mit binärer Quelle maximaler Entropie — **120**

Erzeugung des Zeigers $r_i$ auf R — **122**

Erzeugung der Bitfolgen $A_{i,j}$
mit binärer Quelle maximaler Entropie — **124**

Erzeugung der Zeiger $a_j$ auf $A_{i,j}$ — **126**

Speicherung von R, $r_i$, $A_{i,j}$ und $a_j$
in Speicher der Vorrichtung i — **128**

# Fig. 3

Bildung eines Schlüssels s einer vorgegebenen Länge aus $A_{i,j}$ und $a_j$ durch Vorrichtung i für Übertragung einer Nachricht M der Länge 1 an Vorrichtung j — 130

Bildung eines Initialisierungsvektors v aus $A_{i,j}$ und $a_j$ durch Vorrichtung i — 132

Erzeugung eines ersten Chiffrats C' durch symmetrische Verschlüsselung von M mit Hilfe von s und v durch Vorrichtung i — 134

Erzeugung eines zweiten Chiffrats C aus C' mit Hilfe eines Abschnitts von R, der durch $r_i$ und 1 gegeben ist, durch Vorrichtung i — 136

Sendung von C, $r_i$ und $a_j$ an Vorrichtung j — 138

## Fig. 4

Empfang von C, $r_i$ und $a_j$ durch Vorrichtung j —— **140**

Erzeugung von C' durch Entschlüsselung
von C mit Hilfe von R und $r_i$ durch Vorrichtung j —— **142**

Gewinnung des Schlüssels aus $A_{i,j}$ und $a_j$
durch Vorrichtung j —— **144**

Gewinnung des Initialisierungsvektors v
aus $A_{i,j}$ und $a_j$ durch Vorrichtung j —— **146**

Gewinnung von M
durch symmetrische Entschlüsselung von C'
mit Hilfe von s und v durch Vorrichtung j —— **148**

# Fig. 5

Vorrichtung i wählt $A_{i,j}$ und Zeiger $a_j$ — 150

i setzt AES-Schlüssel $s = A_{i,j} [ a_j : a_j + 255 ]$ — 152

i setzt $a_j = [ a_j + 256 ]$ — 154

i setzt $v = A_{i,j} [ a_j : a_j + 127 ]$ — 156

i setzt $a_j = a_j + 128$ — 158

i verschlüsselt M für j: $C' = AES - 256 ( M, s, v )$ — 160

i verschlüsselt C' mit der Länge l mit R:
$C = C' \oplus R [ r_i : r_i + 1 - 1 ]$ — 162

i setzt $r_i = ( r_i + 1 ) \bmod L$ — 164

C ist bereit für den Versand — 166

## Fig. 6

**182**

Datenträger von i

Speicher — **190**

**192** Prozessor **188** Schnitt-stelle

Programm

**194**

**196**

Computer von i

Speicher — **198**

**200** Schnitt-stelle **204** Prozessor **202** Schnitt-stelle

Programm

**206**

**100**

Netzwerk

**174**

Computer von vertrauenswürdiger Stelle

Speicher — **176**

**180** Schnitt-stelle **184** Prozessor **178** Schnitt-stelle

Programm

**186**

**168**

Hardware Random Number Generator

**172** Schnitt-stelle **170** Physikalischer Prozess

**102ᵢ**

**Fig. 7**

EP 2 288 073 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19856237 A1
- EP 1152567 A2
- US 20060177065 A1
- DE 102004006570 A1
- DE 10206065 A1